# EUROPEAN PATENT SPECIFICATION

(11) **EP 1 759 297 B1**
(45) Date of publication and mention of the grant of the patent: **10.12.2008**
(21) Application number: 05745187.4
(22) Date of filing: 09.06.2005
(51) Int. Cl.: G06F 13/14

(54) **INTERRUPT SCHEME FOR BUS CONTROLLER**
INTERRUPTSCHEMA FÜR BUS-CONTROLLER
MECANISME D'INTERRUPTION POUR CONTROLEUR DE BUS

(30) Priority: 15.06.2004 EP 04102727
(43) Date of publication of application: 07.03.2007
(73) Proprietor: NXP B.V., 5656 AG Eindhoven (NL)
(72) Inventor: CHANG, Yeow, K., NL-5656 AA Eindhoven (NL); LAKSHMINARAYANAN, Santhi, NL-5656 AA Eindhoven (NL)
(74) Representative: White, Andrew Gordon
(86) International application number: PCT/IB2005/051889
(87) International publication number: WO 2005/124564

(56) References cited:
- US-A1- 2002 116 565
- US-B1- 6 466 997
- US-B1- 6 587 898

## Description

This invention relates to a bus controller, and in particular to a device which can be included in electronic equipment in order to control the transfer of data to and from other electronic equipment using an external bus.

It is becoming common for electronic equipment to be provided with interfaces allowing for the transmission of data using a Universal Serial Bus (USB).

When items of electronic equipment are interconnected using the USB system, one item of equipment is designated as the USB Host, while the other items are designated as USB Devices. It is the USB Host which is responsible for initiating and scheduling communications over the USB. For example, the USB Host may be a personal computer (PC), and it may be connected to various USB Devices, such as a printer, a digital camera and a personal digital assistant (PDA).

However, it is also possible to use a USB connection to connect, for example, a camera directly to a printer without requiring connection through a PC. In order to be able to function as a USB Host, an item of equipment, which may be the camera in this example, must be provided with the required functionality, and the present invention relates more particularly to a device, in the form of an integrated circuit, which can be included in an item of equipment, in order to provide it with this functionality. However, it will be appreciated that the item of equipment has other functions, and its USB interconnectivity is only a small part of its functionality. Moreover, it is desirable to be able to include the device into items of equipment, in order to provide them with the ability to act as a USB Host, without requiring those items of equipment to have especially powerful processors.

It is therefore desirable for the device to be able to operate with the smallest possible dependence on the central processing unit (CPU) of the item of equipment in which it is to be incorporated. For example, the device preferably operates as a slave in the bus system of the item of equipment, allowing the CPU to remain as the bus master. Further, it is desirable for the device to place the smallest possible processing burden on the CPU, and in particular to minimize the number of interrupt requests to the CPU. Further, the device should not depend on the CPU using any particular operating system, so that the device can be incorporated in the widest possible range of the items of equipment.

US2002/0116565 discloses to store information indicative of a plurality of USB transactions in a memory by a controller and to execute a plurality of stored transactions in a single batch.

The invention is defined by the appended claims.

According to the present invention, there is provided a host controller, in which interrupt requests, generated for example as a result of the completion of a transaction, can be sent to a system CPU in a controlled manner. For example, different interrupt requests may be given different priorities, or interrupt requests may be sent to the CPU together in order to reduce the disruption to the CPU.

In the Figures:
Fig. 1 is a block schematic diagram of an item of electronic equipment, incorporating a host controller in accordance with the present invention.
Fig. 2 is a block schematic diagram of a host controller in accordance with the present invention.
Fig. 3 is an illustration showing the structure of software in the host controller of Fig. 2.
Fig. 4 shows a logic circuit, which can be used to control the way in which interrupt requests are sent to the CPU of the item of electronic equipment.

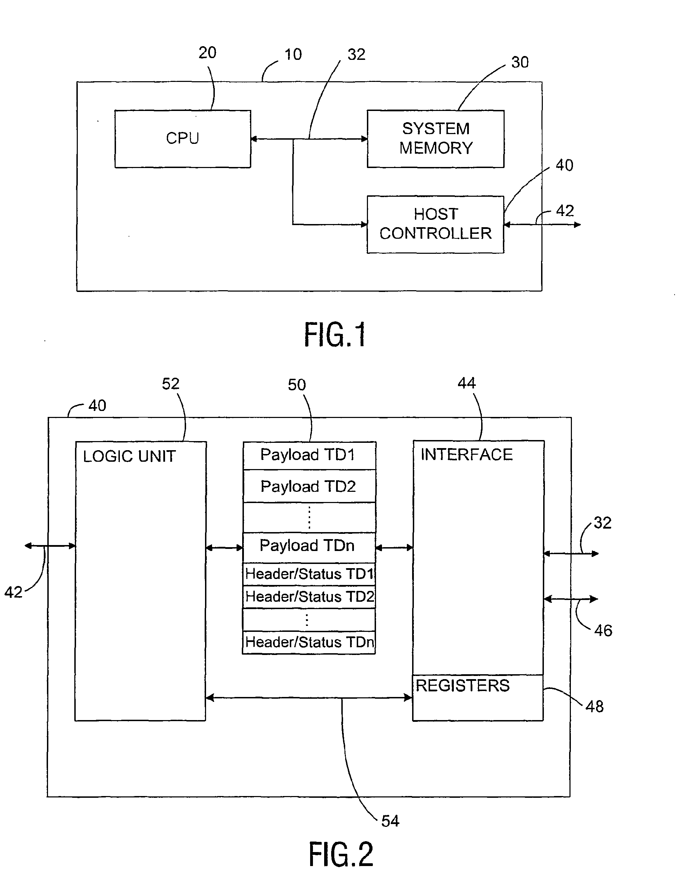

Fig. 1 is a block schematic diagram of the relevant parts of an item 10 of electronic equipment, operating as a USB host. The invention is particularly applicable to devices such as cameras, set-top boxes, mobile phones, or PDAs, in which the functional limitations of the microprocessor and the system memory are more relevant, rather than in personal computers (PCs). However, the invention is applicable to any device which can operate as a USB host.

It will be apparent that the device 10 will have many features, which are not shown in Fig. 1, since they are not relevant to an understanding of the present invention.

The device 10 has a host microprocessor (CPU) 20, which includes a processor core. The CPU 20 is connected to a system memory 30 by means of a peripheral bus 32.

A host controller 40 is also connected to the host microprocessor 20 and the system memory 30, by means of the peripheral bus, or memory bus, 32. The host controller 40 has an interface for a USB bus 42, through which it can be connected to multiple USB devices. In this illustrated embodiment, the host controller 40 is a USB 2.0 host controller, and features of the host controller not described herein may be as specified in the USB 2.0 specification.

As is conventional, the host controller 40 is adapted to retrieve data which is prepared by the processor 20 in a suitable format, and to transmit the data over the bus interface. In USB communications, there are two categories of data transfer, namely asynchronous transfer and periodic transfer. Control and bulk data are transmitted using asynchronous transfer, and isochronous and interrupt data are transmitted using periodic transfer. A Queue Transaction Descriptor (qTD) data structure is used for asynchronous transfer, and an Isochronous Transaction Descriptor (iTD) data structure is used for periodic transfer.

The processor 20 prepares the data in the appropriate structure, and stores it in the system memory 30, and the host controller 40 must then retrieve the data from the system memory 30.

Fig. 2 shows in more detail the structure of the embedded USB host controller 40.

As mentioned above, the host controller 40 has a connection for the memory bus 32, which is connected to an interface 44, containing a Memory Management Unit, a Slave DMA Controller, an interrupt control unit, and hardware configuration registers. The interface 44 also has a connection 46 for control and interrupt signals, and registers 48 which support the RAM structure and the operational registers of the host controller 40.

The interface 44 is connected to the on-chip RAM 50 of the host controller, which in this preferred embodiment is a dual port RAM, allowing data to be written to and read from the memory simultaneously, but could equivalently be a single port RAM with an appropriate arbiter. The memory 50 is connected to the host controller logic unit 52, which also contains an interface for the USB bus 42. Control signals can be sent from the registers 48 to the logic unit 52 on an internal bus 54.

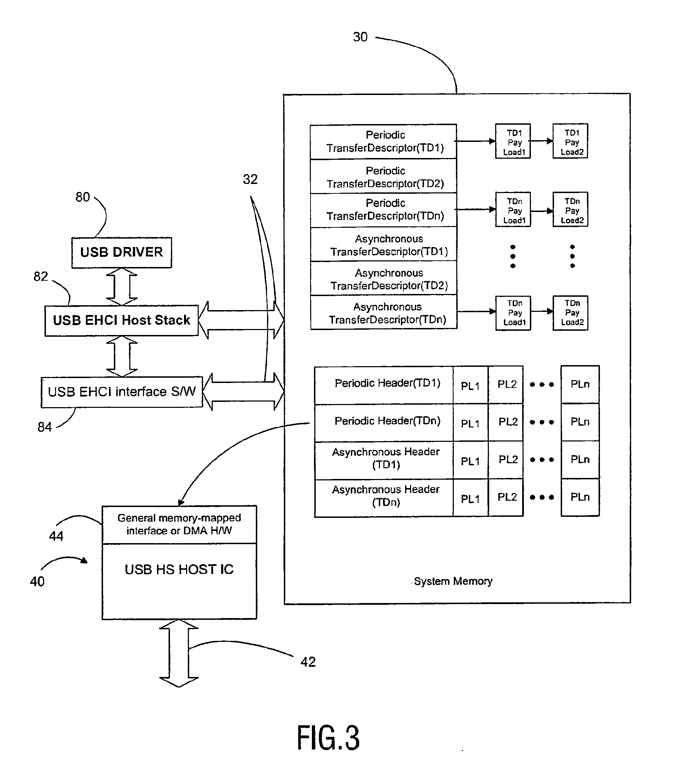

Fig. 3 is a schematic diagram showing in part the software operating on the host controller 40, in order to illustrate the method of operation of the device according to the invention.

The host controller 40 runs USB driver software 80 and USB Enhanced Host Controller Interface software 82, which are generally conventional.

The host controller 40 also runs USB EHCI interface software 84, which prepares a list of transfer-based transfer descriptors for every endpoint to which data is to be transmitted.

The EHCI interface software 84 is written such that it uses the parameters which are generated by the EHCI host stack 82 for the existing periodic and asynchronous headers, and can be used for all different forms of USB transfer, in particular high speed USB transfer, such as high speed isochronous, bulk, interrupt and control and start/stop split transactions.

The host microprocessor 20 writes the transfer-based transfer descriptors into the RAM 50 of the host controller 40 through the peripheral bus 32, without the host controller 40 requiring to master the bus 32. In other words, the host controller 40 acts only as a slave. The transfer-based transfer descriptors can then be memory-mapped into the RAM 50 of the host controller 40.

Advantageously, the built-in memory 50 of the host controller 40 is mapped in the host microprocessor 20, improving the ease with which transactions can be scheduled from the host microprocessor 20.

The use of a dual-port RAM 50 means that, while one transfer-based transfer descriptor is being executed by the host controller 40, the host microprocessor 20 can be writing data into another block space.

As is conventional, data transactions can include isochronous transfers, interrupt transfers, and bulk and control transfers. As is further conventional, when a transfer, as defined by a packet transfer descriptor, has been completed, the host controller generates an interrupt request, for sending to the CPU 20. However, the CPU does not know when each transaction will be completed, and when there are many devices connected into the system there will be many interrupt requests.

The present invention there allows the CPU to prioritise transfer descriptors, for example for particular endpoints, so that their interrupt requests are handled immediately. In other cases, the CPU may handle other interrupt requests from a group of transfer descriptors only when all of them are completed. The transfer descriptors and the payload can then be updated on-the-fly without stopping any other USB transactions or corrupting the RAM data. It is also mentioned that interrupt requests can arise due to timeouts, in particular in the cases of bulk and isochronous transactions.

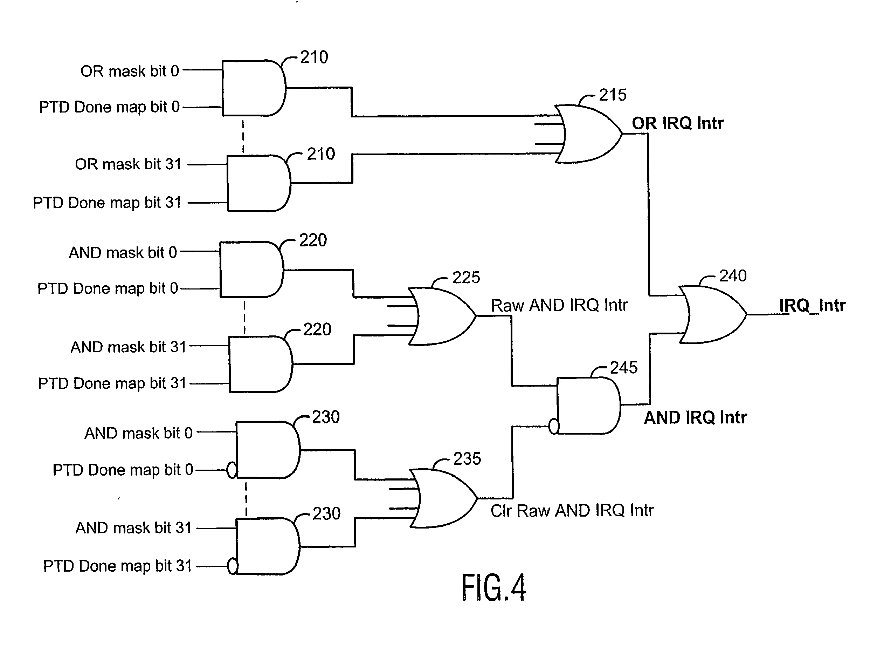

Fig. 4 shows the structure of the logic, which is applied to the interrupt requests generated when transactions are completed. This logical structure can be achieved by logic gates in hardware, or by software.

A PTD Done map has 32 bits. That is, in this example, the logic can handle interrupt requests arriving from up to 32 packet transfer descriptors (PTDs), to indicate that the corresponding transactions are completed. When a transaction is completed, the relevant bit of the PTD Done map is set high. The bits of the PTD Done map are applied to a first series of 32 AND gates 210, a second series of 32 AND gates 220, and, inverted, are also applied to a third series of 32 AND gates 230.

An OR mask also has 32 bits, and is used to prioritise specific packet transfer descriptors. In order to give particular priority to a specific packet transfer descriptor, the corresponding bit of the OR mask is set high. The bits of the OR mask are applied to the second inputs of the first series of 32 AND gates 210.

Further, an AND mask also has 32 bits, and is used to introduce a relationship between specific packet transfer descriptors. The bits of the AND mask are applied to the second inputs of the second series of 32 AND gates 220, and to the second inputs of the third series of 32 AND gates 230.

Thus, when an interrupt request is generated from a packet transfer descriptor, and the corresponding bit of the OR mask is set high, the corresponding AND gate 210 produces a logical "1" as an output, and the OR gates 215, 240 act such that a logical "1" also appears on the output of the OR gate 240, and an interrupt request is sent to the CPU 20.

When an interrupt request is generated from a packet transfer descriptor, and the corresponding bit of the OR mask is set low, the AND mask becomes relevant. The outputs of the AND gates 220 are applied to respective inputs of an OR gate 225. The outputs of the AND gates 230 are applied to respective inputs of an OR gate 235. The output of the OR gate 225 is applied to the first input of an AND gate 245, and the output of the OR gate 235 is applied inverted to the second input of the AND gate 245. The output of the AND gate 245 is applied to the OR gate 240.

The effect of this logic is that a logical "1" appears on the output of the OR gate 240, and an interrupt request is sent to the CPU 20, only when interrupt requests are generated from all of the packet transfer descriptors, for which the corresponding bits of the AND mask are set high. For example, if bits 2, 4 and 10 are set in the AND mask register, then an interrupt request is sent to the CPU only if bits 2, 4 and 10 of the PTD Done map are set high. If only one of bits 2, 4 or 10 of the PTD Done map are set high, this will not send an interrupt to the CPU.

The system software can vary the OR mask bits, and the AND mask bits, as required, in order to determine which transfer descriptors get priority, in terms of their ability to send Interrupt requests to the CPU, and which must wait until other transactions are also complete, and then send Interrupt requests to the CPU together.

In effect, this allows the CPU 20 to vary the frequency with which it will receive interrupt requests.

## Claims

1. A host controller (40), for transferring data over a bus communication system (42), under the control of a processor (20), wherein data is transferred in a plurality of individual transactions and a processor interrupt request is generated on completion of a transaction, **characterized in that**
the host controller comprises logic (52) such that, when a processor interrupt request is generated on completion of a transaction from a first group of said plurality of individual transactions, an interrupt request is sent to the processor, and
when a processor interrupt request is generated on completion of a transaction from a second group of said plurality of individual transactions, an interrupt request is not sent to the processor.

2. A host controller as claimed in claim 1, wherein the host controller further comprises logic such that, when a processor interrupt request is generated on completion of a transaction from a third group of said plurality of individual transactions, an interrupt request is sent to the processor only when interrupt requests are generated on completion of transactions from all of said third group of said plurality of individual transactions.

3. A host controller as claimed in claim 1 or claim 2, further comprising:
- a first interface, for connection to a memory bus which interconnects the processor and a system memory; and
- a second interface, for connection to the bus communication system.

4. A bus communication device, comprising:
- a processor;
- a system memory;
- a host controller according to claim 1; and
- a memory bus interconnecting the processor, the system memory, and the host controller.

5. A bus communication device as claimed in claim 4, wherein the host controller further comprises logic such that, when a processor interrupt request is generated on completion of a transaction from a third group of said plurality of individual transactions, an interrupt request is sent to the processor only when interrupt requests are generated on completion of transactions from all of said third group of said plurality of individual transactions.

6. A method of operation of a host controller (40), for transferring data over a bus communication system (42), under the control of a processor (20), wherein data is transferred in a plurality of individual transactions and a processor interrupt request is generated on completion of a transaction, **characterized in that** the method comprises:
when a processor interrupt request is generated on completion of a transaction from a first group of said plurality of individual transactions, sending an interrupt request to the processor, and
when a processor interrupt request is generated on completion of a transaction from a second group of said plurality of individual transactions, not sending an interrupt request to the processor.

7. A method as claimed in claim 6, wherein the method further comprises, when a processor interrupt request is generated on completion of a transaction from a third group of said plurality of individual transactions, sending an interrupt request to the processor only when interrupt requests are generated on completion of transactions from all of said third group of said plurality of individual transactions.

## Patentansprüche

1. Host-Steuervorrichtung (40) zum Übertragen von Daten über ein Bus-Kommunikationssystem (42) unter der Kontrolle eines Prozessors (20), wobei die Daten in mehreren individuellen Transaktionen übertragen werden und bei Abschluss einer Transaktion eine Prozessorunterbrechungsanforderung erzeugt wird,
**dadurch gekennzeichnet, dass**
die Host-Steuervorrichtung eine Logik (52) umfasst, so dass dann, wenn bei Abschluss einer Transaktion von einer ersten Gruppe der mehreren individuellen Transaktionen eine Prozessorunterbrechungsanforderung erzeugt wird, eine Unterbrechungsanfrage zum Prozessor gesendet wird, und
dann, wenn bei Abschluss einer Transaktion von einer zweiten Gruppe der mehreren individuellen Transaktionen eine Prozessorunterbrechungsanfrage erzeugt wird, keine Unterbrechungsanfrage zum Prozessor gesendet wird.

2. Host-Steuervorrichtung nach Anspruch 1, wobei die Host-Steuervorrichtung ferner eine Logik umfasst, so dass dann, wenn bei Abschluss einer Transaktion von einer dritten Gruppe der mehreren individuellen Transaktionen eine Prozessorunterbrechungsanforderung erzeugt wird, nur dann eine Unterbrechungsanforderung zum Prozessor gesendet wird, wenn bei Abschluss von Transaktionen von allen aus der dritten Gruppe der mehreren individuellen Transaktionen Unterbrechungsanforderungen erzeugt werden.

3. Host-Steuervorrichtung nach Anspruch 1 oder Anspruch 2, ferner umfassend:
eine erste Schnittstelle für die Verbindung zu einem Speicherbus, der den Prozessor und einen Systemspeicher verbindet; und
eine zweite Schnittstelle für die Verbindung mit dem Bus-Kommunikationssystem.

4. Bus-Kommunikationsvorrichtung, umfassend:
einen Prozessor;
einen Systemspeicher;
eine Host-Steuervorrichtung nach Anspruch 1; und
einen Speicherbus, der denn Prozessor, den Systemspeicher und die Host-Steuervorrichtung verbindet.

5. Bus-Kommunikationsvorrichtung nach Anspruch 4, wobei die Host-Steuervorrichtung ferner eine Logik umfasst, so dass dann, wenn bei Abschluss einer Transaktion von einer dritten Gruppe der mehreren individuellen Transaktionen eine Prozessorunterbrechungsanforderung erzeugt wird, eine Unterbrechungsanforderung nur dann zum Prozessor gesendet wird, wenn bei Abschluss von Transaktionen von allen aus der dritten Gruppe der individuellen Transaktionen Unterbrechungsanforderungen erzeugt werden.

6. Verfahren zum Betreiben einer Host-Steuervorrichtung (40) zur Übertragung von Daten über ein Bus-Kommunikationssystem (42) unter der Kontrolle eines Prozessors (20), wobei Daten in mehreren individuellen Transaktionen übertragen werden und bei Abschluss einer Transaktion eine Prozessorunterbrechungsanforderung erzeugt wird,
**dadurch gekennzeichnet, dass** das Verfahren umfasst:
Senden einer Unterbrechungsanforderung zum Prozessor, wenn bei Abschluss einer Transaktion von einer ersten Gruppe der mehreren individuellen Transaktionen eine Prozessorunterbrechungsanforderung erzeugt wird, und
Nicht-Senden einer Unterbrechungsanforderung zum Prozessor, wenn bei Abschluss einer Transaktion von einer zweiten Gruppe der mehreren individuellen Transaktionen eine Prozessorunterbrechungsanforderung erzeugt wird.

7. Verfahren nach Anspruch 6, wobei das Verfahren ferner dann, wenn bei Abschluss einer Transaktion von einer dritten Gruppe der mehreren individuellen Transaktionen eine Prozessorunterbrechungsanforderung erzeugt wird, das Senden einer Unterbrechungsanforderung zum Prozessor nur dann, wenn bei Abschluss von Transaktionen von allen aus der dritten Gruppe der mehreren individuellen Transaktionen Unterbrechungsanforderungen erzeugt werden, umfasst.

## Revendications

1. Contrôleur hôte (40) permettant de transférer des données sur un système de communication par bus (42), sous le contrôle d'un processeur (20), dans lequel des données sont transférées selon une pluralité de transactions individuelles et dans lequel une requête d'interruption de processeur est générée à l'achèvement d'une transaction,
**caractérisé en ce que** le contrôleur hôte comporte une logique (52) de façon que, lorsqu'une requête d'interruption de processeur est générée à l'achèvement d'une transaction provenant d'un premier groupe de ladite pluralité de transactions individuelles, une requête d'interruption est transmise au processeur, et
**en ce que**, lorsqu'une requête d'interruption de processeur est générée à l'achèvement d'une transaction provenant d'un deuxième groupe de ladite pluralité de transactions individuelles, une requête d'interruption n'est pas transmise au processeur.

2. Contrôleur hôte selon la revendication 1, dans lequel le contrôleur hôte comprend de plus une logique telle que, lorsqu'une requête d'interruption de processeur est générée à l'achèvement d'une transaction provenant d'un troisième groupe de ladite pluralité de transactions individuelles, une requête d'interruption est envoyée au processeur seulement lorsque des requêtes d'interruption sont générées à l'achèvement des transactions provenant de la totalité des transactions dudit troisième groupe de ladite pluralité de transactions individuelles.

3. Contrôleur hôte selon la revendication 1 ou la revendication 2, comprenant, de plus :
- une première interface destinée à une connexion avec un bus mémoire qui interconnecte le processeur et une mémoire du système ; et
- une seconde interface destinée à une connexion avec le système de communication par bus.

4. Dispositif de communication par bus, comprenant :
- un processeur ;
- une mémoire de système ;
- un contrôleur hôte selon la revendication 1 ; et
- un bus mémoire interconnectant le processeur, la mémoire système, et le contrôleur hôte.

5. Dispositif de communication par bus selon la revendication 4, dans lequel le contrôleur hôte comprend, de plus, une logique telle que, lorsqu'une requête d'interruption de processeur est générée à l'achèvement d'une transaction provenant d'un troisième groupe de ladite pluralité de transactions individuelles, une requête d'interruption est envoyée au processeur seulement lorsque des requêtes d'interruption sont générées à l'achèvement de transactions provenant de la totalité des transactions dudit troisième groupe de ladite pluralité de transactions individuelles.

6. Procédé de fonctionnement d'un contrôleur hôte (40) permettant de transférer des données sur un système de communication par bus (42), sous le contrôle d'un processeur (20), dans lequel des données sont transférées selon une pluralité de transactions individuelles et dans lequel une requête d'interruption de processeur est générée à l'achèvement d'une transaction, **caractérisé en ce que** le procédé consiste à :
lorsqu'une requête d'interruption de processeur est générée à l'achèvement d'une transaction provenant d'un premier groupe de ladite pluralité de transactions individuelles, transmettre une requête d'interruption au processeur, et
lorsqu'une requête d'interruption du processeur est générée à l'achèvement d'une transaction provenant d'un deuxième groupe de ladite pluralité de transactions individuelles, ne pas transmettre de requête d'interruption au processeur.

7. Procédé selon la revendication 6, dans lequel le procédé consiste, de plus, lorsqu'une requête d'interruption de processeur est générée à l'achèvement d'une transaction provenant d'un troisième groupe de ladite pluralité de transactions individuelles, à transmettre une requête d'interruption au processeur seulement lorsque des requêtes d'interruption sont générées à l'achèvement de transactions provenant de la totalité des transactions dudit troisième groupe de ladite pluralité de transactions individuelles.
